# EUROPEAN PATENT APPLICATION

(11) **EP 3 037 004 A1**
(43) Date of publication of application: **29.06.2016**
(21) Application number: 15202512.8
(22) Date of filing: 23.12.2015
(51) Int. Cl.: A23L 7/13, A23L 11/00

(54) **CRUNCHY CRISPS FROM LUPIN FLOUR AND METHOD FOR PRODUCTION THEREOF**

(30) Priority: 24.12.2014 NL 2014052
(71) Applicant: van den Einden, Adrianus W.M.C., 5715 BM Lierop (NL)
(72) Inventor: van den Einden, Adrianus W.M.C., 5715 BM Lierop (NL)
(74) Representative: Jilderda, Anne Ayolt

(57) **Abstract**

An innovative food comprises a source of one or more essential amino acids in the form of lupin flour. The lupin flour is processed into a food product which is directly or indirectly suitable for human consumption in the form of a crisp baked or fried body of a dough of at least lupin flour and eggs, which eggs have had their yolk and shell removed, or lupin flour in combination with oats.

## Description

The present invention relates to food comprising a source of one or more essential amino acids, which source comprises lupin flour which is processed into a food product which is directly or indirectly suitable for human consumption. The invention also relates to a method for producing food rich in one or more essential amino acids on the basis of lupin flour.

Partly as a result of a number of incidents of infections and diseases in the intensive animal farming and poultry farming sectors, meat has in recent years been placed in a bad light in the eyes of many consumers. Contributing toward this are reports concerning the use of authorized or non-authorized substances, such as antibiotics in particular, administered to animals in order to make the animals better resistant to disease and to enhance growth. Not surprisingly, consumers are increasingly opting for vegetable meat substitutes in their daily diet, wherein this group has long since ceased to be limited to vegetarians, vegans and other groups of consumers who reject the consumption of meat on the basis of a determined personal conviction. Diverse soya products have traditionally been applied as such meat substitutes.

A drawback of soya products however is that genetically modified soya has been coming onto the market as a result of genetic manipulation of soya beans. Consumers are becoming increasingly wary of consuming soya products which could include such modified soya. Some consumers moreover reject the consumption of imitation meat and opt instead for a purely vegetable diet without the illusion of eating anything meat-like. It is however undeniable that meat and common meat substitutes contain essential amino acids, a deficiency of which could then occur.

The present invention has for its object, among others, to provide food and a method for production thereof which obviates this and other drawbacks.

In order to achieve the stated object a food of the type described in the preamble has the feature according to a first aspect of the invention that the food product comprises a crisp baked or fried product of a dough of at least lupin flour and eggs, which eggs have had their yolk and shell removed.

Lupin flour is obtained from the beans of the seeds of the lupin plant. Special varieties with low-alkaloid seeds have been improved for human consumption. These are normally chosen for processing to lupin flour for human consumption. Preference is usually given here to the blue lupin (Lupinus angustifolius) as source of the seeds, also referred to as beans, from which the lupin flour is obtained. This lupin flour comprises about 25% fat and 40% high-grade protein, including the essential amino acids methionine and tryptophan, and is therefore a good alternative to soya, and to genetically modified soya in particular.

According to the invention the lupin flour is not processed into a meat substitute with the structure, taste and bite of meat, but opted for instead is a crisp baked or fried body which can serve as snack between meals or as supplement to a meal. The addition of the white part of eggs, referred to below simply as egg white unless expressly indicated otherwise, to the lupin flour allows a smooth, cohesive dough to be formed therefrom which can be crisp baked or fried. A consumer with a preference for a meat-free or low-meat diet can thus nevertheless consume sufficient of the stated essential amino acids in the form of a healthy snack which has been formed according to the invention from lupin flour.

Neither of itself nor after addition of egg white does lupin flour have much flavour. A preferred embodiment of the food according to the invention therefore has the feature that one or more additives, in particular flavourings, are added to the dough. It is possible here to opt for a sweet or savoury snack by selecting and dosing the additives accordingly. A further preferred embodiment of the food according to the invention has the feature however that the one or more additives comprise at least an additive from a group of salt, curry, ground pepper, chopped thyme and chopped spinach.

A new savoury food is thus created which can be added as supplement to a meat-free or low-meat meal or can be consumed as savoury snack between meals. A particular embodiment of the food according to the invention has in this context the feature that the body comprises a disc-shaped body, in particular a relatively thin crisp body, which has been crisp baked or fried in optionally straight form.

It is possible per se to have recourse to eggs of diverse type for the egg white constituent, although particularly good experiences have been had with a further particular embodiment of the food which is characterized according to the invention in that the eggs comprise poultry eggs, in particular chicken eggs, from which a yolk and shell have been separated. Chicken eggs in particular are generally accepted as ingredient by consumers, wherein a specific choice can optionally be made for eggs from chickens which have lacked for little or nothing in terms of animal welfare - normally referred to as aviary eggs, free-range eggs or free-run eggs in accordance with the degree of animal welfare - instead of eggs from battery cage chickens.

The invention also relates to a method with which such a new food can be prepared from lupin flour. A method of the type described in the preamble has for this purpose the feature according to the invention that lupin flour and eggs from which a yolk and shell have been separated are mixed in a mutual ratio and processed to form a cohesive dough, that a dough layer of an at least substantially constant thickness is formed from the dough, that individual dough bodies are removed from the dough layer and that the dough bodies are crisp baked or fried, in particular deep-fried, in optionally modified form.

A preferred embodiment of the method according to the invention has the feature here that the eggs comprise chicken eggs from which the shell and yolk have been separated. This is therefore simply the white portion of the eggs, which will be referred to below simply as egg white. If "protein" is on the other hand understood below to mean the organic chemical group of proteins, this will then be expressly stated. Using chicken egg white a smooth and cohesive dough can be formed from lupin flour.

Excellent results have been achieved with a particular embodiment of the method which is characterized according to the invention in that the lupin flour and the eggs are mixed in a mutual ratio of 100 to between 60 and 70 units of weight in the dough. Individual dough bodies can be separated herefrom by thin rolling and punching or cutting and can subsequently be baked or fried, in particular by deep-frying, to form crispy snacks, crisps, while retaining a content of essential amino acids.

For the purpose of a satisfactory taste sensation a further particular embodiment of the method according to the invention has the feature that at least one additive, in particular at least one flavouring, is added to the dough. The taste of the product can be modified here as desired to the wishes of the consumer. Good experiences have been had in this respect with a particular embodiment of the method according to the invention characterized in that at least one additive taken from a group of salt, curry, ground pepper, chopped thyme and chopped spinach is added to the dough. A savoury snack can thus be realized in a similar manner to potato crisps.

The specific nature, combination and amount of additives can be determined experimentally, for instance with a tasting panel. For the additives stated above it is the case that an appetizing result appealing to many respondents has been obtained with a further particular embodiment of the method according to the invention characterized in that the lupin flour and at least one additive were mixed in a mutual ratio of 100 to between 1 and 15 units of weight in the dough.

A food of the type described in the preamble is characterized according to a further aspect of the invention in that the food product comprises a crisp baked or fried body of a dough comprising at least lupin flour and oatmeal. The crisp baked or fried body particularly forms a cracker here as protein-rich addition to the daily diet. A particular embodiment of the product is characterized here in that the dough comprises lupin flour and oatmeal in a mutual ratio of 30-40% lupin flour and 60-70% oatmeal.

With a view to a pleasant individual taste of the end product a further particular embodiment of the food according to the invention has the feature that the dough comprises at least one added ingredient taken from a group of spinach and beet syrup. Spinach imparts its own very individual form of savouriness to the product here, while beet syrup imparts sweetness. Both are completely vegetable and gluten-free, and thereby suitable for a gluten-free and vegetarian diet.

In order to be able to impart a specific structure and consistency to the end product, a further particular embodiment of the food according to the invention has the feature that the dough comprises at least one added ingredient taken from a group of oil, in particular linseed oil, and a raising agent, in particular sodium bicarbonate. The addition of oil makes the dough smoother and the end product firmer, while the addition of a raising agent such as sodium bicarbonate (baking powder) imparts lightness and brittleness to the end product. It is possible to experiment herewith as desired.

An exceptionally tasty and appealing attractive end product is provided by a further preferred embodiment of the food according to the invention characterized in that the body is sprinkled with oat flakes.

The invention will be further elucidated and explained hereinbelow on the basis of a number of exemplary embodiments.

Three exemplary embodiments of foods according to the invention will be described below with reference to their specific recipes on the basis of different additives, in particular flavourings. The different recipes follow the same, or at least similar preparation methods which result in crunchy crisps which can be served as snack between meals or as side dish during a meal. In respect of the ingredients only their mutual ratio is shown, and an appropriate multiple thereof will be applied in accordance with an actual quantity of end product desired in practice.

### Exemplary embodiment I (lupin-curry-crisps):

| | | |
|---|---|---|
| Lupin flour (finely sieved) | 100 grams | 100% |
| Chicken egg white: | 65 grams | 65 % |
| Salt: | 1 gram | 1 % |
| Curry: | 3 grams | 3 % |

### Exemplary embodiment II (lupin-thyme-crisps):

| | | |
|---|---|---|
| Lupin flour (finely sieved) | 100 grams | 100% |
| Chicken egg white: | 65 grams | 65 % |
| Ground black pepper: | 0.2 gram | 0.2 % |
| Salt: | 2.5 grams | 2.5 % |
| Freshly chopped thyme leaves | 1 gram | 1 % |

### Exemplary embodiment III (lupin-spinach-crisps):

| | | |
|---|---|---|
| Lupin flour (finely sieved) | 100 grams | 100% |
| Chicken egg white: | 60 grams | 60 % |
| Salt: | 1 gram | 1 % |
| Spinach fine: | 12 grams | 12 % |

### Method of preparation:

### 1. Mixing:

All ingredients are brought together in a dough machine and gently mixed well therein for at least 20 minutes, and preferably longer for flavour transfer and binding of the dough.

This results in a better deep-frying of the end product. For the mixing use can be made of a planetary mixer for meal-sized portions, though this can be scaled up as the case arises to industrial scale, wherein other equipment will accordingly be employed.

### 2. Rolling out:

The dough is rolled out onto a baking belt/pastry dough belt and turned over at least twice. In a cooking work area use can be made for this purpose of standard baking rollers. In an industrial setting it will be possible to employ a motorized roller. Roll the dough out to a thickness of about 0.4 mm and then fold it several times. Then roll out again to a thickness of about 0.4 mm. The dough thus acquires the desired structure and thickness. Store this rolled-out dough dry and covered, optionally in the refrigerator.

### 3. Cutting and/or punching out:

The dough is cut or punched out in a desired shape in order to separate a quantity of individual dough bodies therefrom. The dough bodies preferably have a triangular or elongate form and are roughly congruent in respect of shape and dimensions. Cutting waste can optionally be reused. The bodies have a greatest length and width in the order of several centimetres and a thickness in the order of tenths of a millimetre to several millimetres. Prior to a bake-off step a differing shape can be given to the bodies by twisting, rolling or bending, with a view to the final eating and taste experience (bite).

### 4. Deep-frying:

After the bodies have thus been formed from the rolled-out dough, the bodies are placed in a deep-frying bath. Purely vegetable deep-frying oil is applied here at a temperature of 150-180 degrees Celsius and the product is fried for several minutes until golden brown and crispy. In order to impart a similar end result to both sides of the body the product is regularly turned over during deep-frying by being turned manually or both sides are guided automatically through the deep-frying bath. Following the deep-frying the thus obtained crisps are then left to drain and then further dried, optionally blown dry. If desired, the product is sprinkled with salt after the deep-frying, optionally in combination with the same flavourings which have already been included in the dough, or other flavourings.

### 5. Optional packaging:

Once the product has dried and cooled sufficiently, it can be presented for immediate consumption, for instance in a restaurant, or packed in a consumer packaging for later consumption. The obtained crisps can be packaged via a packaging line, typically in a quantity of 50 grams to 500 grams per final packaging.

### Exemplary embodiment IV (lupin-oat-crackers):

| | | |
|---|---|---|
| Lupin flour (finely sieved) | 100-140 grams | |
| Oatmeal (finely sieved) | 210-250 grams | |
| Water | 200 ml. | |
| Chopped spinach: | 60 grams | 30 % |
| Rapeseed oil | dash | |
| Beet syrup | to taste | |
| Salt: | 7 grams | 1 % |
| Oat flakes: | 150 grams | |

### 1. Mixing:

The flour, water, salt, the beet syrup, the chopped spinach and the oil are brought together in a dough machine and gently mixed well therein for about 5 minutes. For the mixing use can be made of a planetary mixer for meal-sized portions, though this can be scaled up as the case arises to industrial scale, wherein other equipment will accordingly be employed.

The kneading results in a smooth dough. Additional oil is optionally admixed for this purpose.

### 2. Shaping

A ball is made from the dough and rolled out onto a baking plate covered with baking paper. The rolled-out dough is coated with water and the oat flakes are sprinkled thereover and pressed on firmly. A plurality of small holes can optionally be punched into the dough. The whole is cut into rectangular segments, based on the set quantity of about 30 pieces of typically 5 x 10 centimetres.

### 3. Baking

The thus formed dough bodies are baked to crispy crackers in about 20 minutes at 175 degrees in an oven.

Thus added to the range of existing foods is a completely new product which can serve as supplement to a meal or as snack between meals and with which, in the case of a low-meat or meat-free diet, sufficient essential amino acids such as occur naturally in lupin flour are nevertheless consumed.

Although the invention has been further elucidated above with reference to only three examples, it will be apparent that the invention is by no means limited thereto. On the contrary, many variations and embodiments are still possible within the scope of the invention. Additives, and in particular flavourings, other than those stated can thus be added or used in order to achieve a specific taste sensation. The dough is also suitable for larger and smaller bodies than those described. Instead of deep-frying, it is also possible to opt for a bake-off step in an oven. Sweeteners can further also be used instead of savoury additives in order to optionally even realize a sweet end product as alternative to one or more savoury products.

## Claims

1. Food comprising a source of at least one essential amino acid, which source comprises lupin flour which is processed into a food product which is directly or indirectly suitable for human consumption, **characterized in that** the food product comprises a crisp baked or fried product of a dough of at least lupin flour and eggs, which eggs have had their yolk and shell removed.

2. Food as claimed in claim 1, **characterized in that** one or more additives, in particular flavourings, are added to the dough.

3. Food as claimed in claim 2, **characterized in that** the one or more additives comprise at least an additive from a group of salt, curry, ground pepper, chopped thyme and chopped spinach.

4. Food as claimed in one or more of the foregoing claims, **characterized in that** the body comprises a disc-shaped body, in particular a relatively thin crisp body, which has been crisp baked or fried in optionally straight form.

5. Food as claimed in one or more of the foregoing claims, **characterized in that** the eggs comprise poultry eggs, in particular chicken eggs, from which a yolk and shell have been separated.

6. Food comprising a source of at least one essential amino acid, which source comprises lupin flour which is processed into a food product which is directly or indirectly suitable for human consumption, **characterized in that** the food product comprises a crisp baked or fried product of a dough comprising at least lupin flour and oatmeal.

7. Food as claimed in claim 6, **characterized in that** the dough comprises lupin flour and oatmeal in a mutual ratio of 30-40% lupin flour and 60-70% oatmeal.

8. Food as claimed in claim 6 or 7, **characterized in that** the dough comprises at least one added ingredient taken from a group of spinach and beet syrup.

9. Food as claimed in claim 6, 7 or 8, **characterized in that** the dough comprises at least one added ingredient taken from a group of oil, in particular linseed oil, and a raising agent, in particular sodium bicarbonate.

10. Food as claimed in claim 6, 7, 8 or 9, **characterized in that** the body is sprinkled with oat flakes.

11. Method for producing food rich in one or more essential amino acids on the basis of lupin flour, **characterized in that** lupin flour and eggs from which a yolk and shell have been separated are mixed in a mutual ratio and processed to form a cohesive dough, that a dough layer of an at least substantially constant thickness is formed from the dough, that individual dough bodies are removed from the dough layer and that the dough bodies are crisp baked or fried, in particular deep-fried, in optionally modified form.

12. Method as claimed in claim 11, **characterized in that** the eggs comprise chicken eggs from which the shell and yolk have been separated.

13. Method as claimed in claim 11 or 12, **characterized in that** the lupin flour and the eggs are mixed in a mutual ratio of 100 to between 60 and 70 units of weight in the dough.

14. Method as claimed in claim 11, 12 or 13, **characterized in that** at least one additive, in particular at least one flavouring, is added to the dough.

15. Method as claimed in claim 11, **characterized in that** at least one additive taken from a group of salt, curry, ground pepper, chopped thyme and chopped spinach is added to the dough.

16. Method as claimed in claim 15, **characterized in that** the lupin flour and at least one additive are mixed in a mutual ratio of 100 to between 1 and 15 units of weight in the dough.

17. Method as claimed in one or more of the claims 11-16, **characterized in that** a quantity of dough bodies are packaged together in a consumer packaging.
